# EUROPÄISCHE PATENTSCHRIFT

(11) **EP 2 956 689 B1**
(45) Veröffentlichungstag und Bekanntmachung des Hinweises auf die Patenterteilung: **13.07.2016**
(21) Anmeldenummer: 13716205.3
(22) Anmeldetag: 05.04.2013
(51) Int. Cl.: F16H 1/10, F15B 15/12

(54) **ELEKTRISCH BETÄTIGTE DREHANTRIEBSVORRICHTUNG**
ELECTRICALLY ACTUATED ROTARY DRIVE DEVICE
ACTIONNEUR ÉLECTRIQUE

(43) Veröffentlichungstag der Anmeldung: 23.12.2015
(73) Patentinhaber: Festo AG & Co. KG, 73734 Esslingen (DE)
(72) Erfinder: THORWART, Gerhard, 70794 Filderstadt (DE)
(74) Vertreter: Patentanwälte Magenbauer & Kollegen Partnerschaft mbB
(86) Internationale Anmeldenummer: PCT/EP2013/001012
(87) Internationale Veröffentlichungsnummer: WO 2014/161563

(56) Entgegenhaltungen:
- DE-A1-102011 107 012
- DE-B1- 1 450 768
- US-A- 4 237 571

## Beschreibung

Die Erfindung betrifft eine elektrisch betätigte Drehantriebsvorrichtung, mit einem eine Vorderseite und eine diesbezüglich entgegengesetzte Rückseite aufweisenden Getriebegehäuse, an dem ein an der Vorderseite des Getriebegehäuses zugängliches Abtriebsteil drehbar gelagert ist, das mit einem in dem Getriebegehäuse drehbar angeordneten Abtriebszahnrad in Antriebsverbindung steht, mit dem ein Antriebsritzel eines außen an der Rückseite des Getriebegehäuses angeordneten elektrischen Antriebsmotors in Verzahnungseingriff steht, wobei das Abtriebszahnrad als Hohlrad mit einer Innenverzahnung ausgebildet ist und wobei das Antriebsritzel im Innern des Getriebegehäuses axial in das Hohlrad eintaucht und mit dessen Innenverzahnung in Verzahnungseingriff steht.

Eine aus der DE 10 2011 107 012 A1 bekannte Drehantriebsvorrichtung ist mit einer Hybrid-Antriebstechnik ausgestattet und enthält außer einem elektrischen Antriebsmotor auch noch eine durch Fluidkraft betätigbare Antriebseinrichtung, wobei sowohl der Antriebsmotor als auch die fluidisch betätigbare Antriebseinrichtung auf ein an einer Vorderseite eines Getriebegehäuses zugängliches Abtriebsteil einwirken, um dieses in eine Rotationsbewegung zu versetzen. Der Kraftfluss zwischen dem rückseitig an das Getriebegehäuse angebauten Antriebsmotor und dem Abtriebsteil wird mittels eines im Innern des Getriebegehäuses angeordneten Getriebes realisiert, das ein mit dem Abtriebsteil in Antriebsverbindung stehendes Abtriebszahnrad und ein mit dem Abtriebszahnrad in Verzahnungseingriff stehendes, durch den Antriebsmotor antreibbares Antriebsritzel aufweist. Sowohl das Antriebsritzel als auch das Abtriebszahnrad besitzen eine Außenverzahnung, so dass sie in einer zur Drehachse des Abtriebsteils rechtwinkeligen Ebene nebeneinander angeordnet sind und das Abtriebszahnrad radial außen von dem Antriebsritzel flankiert ist.

Bei der bekannten Drehantriebsvorrichtung lässt sich der elektrische Antriebsmotor relativ gut unterbringen, weil er aufgrund der zusätzlich vorhandenen, mit Fluidkraft betriebenen Antriebseinrichtung verhältnismäßig klein dimensioniert werden kann. Problematisch wird es allerdings, wenn die Drehantriebsvorrichtung rein elektrisch betrieben werden soll, da ein dann erforderlicher Antriebsmotor aufgrund des erhöhten Leistungsbedarfes über größere Abmessungen verfügt, was zulasten der Kompaktheit der Drehantriebsvorrichtung geht.

Aus einer aus dem Jahr 2011 datierenden Publikation der Oriental Motor Europa GmbH, Seiten 1 und 4, ist eine elektrische Drehantriebsvorrichtung bekannt, bei der ebenfalls ein mit einer Außenverzahnung versehenes Abtriebszahnrad mit einem Antriebsritzel kämmt, wobei allerdings der Eingriffsbereich zwischen den beiden Verzahnungen anders als im Falle der DE 10 2011 107 012 A1 nicht einem Eckbereich des Getriebegehäuses zugeordnet ist, sondern zwischen zwei Eckbereichen eines Befestigungsrahmens liegt.

Aus der US 4 237 571 A ist eine in einem Bodenpolierer angeordnete Drehantriebsvorrichtung der eingangs genannten Art bekannt, die ein an einer Bodenplatte angeordnetes Getriebegehäuse aufweist, an dem ein Abtriebsteil drehbar gelagert ist, an dem eine Bürste befestigt ist. Ein außen an das Getriebegehäuse angebauter Elektromotor ragt mit einem Ritzel in das Getriebegehäuse hinein und steht dort mit einer Innenverzahnung in Eingriff, die an dem Abtriebsteil ausgebildet ist.

Der Erfindung liegt die Aufgabe zugrunde, eine für elektrische Betätigung ausgelegte Drehantriebsvorrichtung zu schaffen, die auch bei hoher Antriebsleistung mit kompakten Abmessungen realisierbar ist.

Zur Lösung dieser Aufgabe ist in Verbindung mit den eingangs genannten Merkmalen vorgesehen, dass sich durch das Getriebegehäuse und das Abtriebsteil ein zur Drehachse des Abtriebsteils koaxialer Durchführkanal hindurch erstreckt, der zur Vorderseite des Abtriebsteils und zur Rückseite des Getriebegehäuses ausmündet und der zur Durchführung von Energieübertragungsmitteln wie Kabel oder Schläuche nutzbar ist.

Dadurch, dass das Abtriebszahnrad ein Hohlrad mit Innenverzahnung ist, verlagert sich der Eingriffsbereich zwischen den Verzahnungen des Antriebsritzels und des Abtriebszahnrades im Vergleich zum Stand der Technik näher zur Drehachse des Abtriebszahnrades, so dass er sich von der Außenkontur des Getriebegehäuses entfernt. Auf diese Weise kann selbst ein über relativ große Querschnittsabmessungen verfügender Antriebsmotor derart rückseitig am Getriebegehäuse angebracht werden, dass er die Außenkontur des Getriebegehäuses nicht oder nur geringfügig überragt. Auf diese Weise kann die Drehantriebsvorrichtung trotz erhöhter elektrischer Leistung mit kompakten Querabmessungen ausgebildet werden. Durch das Getriebegehäuse und das Abtriebsteil hindurch erstreckt sich ein zur Drehachse des Abtriebsteils koaxialer Durchführkanal, der die Möglichkeit bietet, Energieübertragungsmittel wie Kabel oder Schläuche hindurchzuführen, die an eine Komponente angeschlossen werden sollen, die zwecks rotativer Positionierung an dem Abtriebsteil angebracht wird. Auf diese Weise kann beispielsweise eine elektrische oder pneumatische Energieversorgung einer an dem Abtriebsteil anzubringenden Greifvorrichtung bewerkstelligt werden.

Vorteilhafte Weiterbildungen der Erfindung gehen aus den Unteransprüchen hervor.

Das Abtriebsteil besitzt zweckmäßigerweise stirnseitig eine teller- oder scheibenförmige Abtriebswand, an der Schnittstellenmittel ausgebildet sind, die sich dafür eignen, eine rotativ unidirektional oder hin und her zu bewegende Komponente zu befestigen. Die teller- oder scheibenförmige Abtriebswand erlaubt aufgrund ihrer großen Fläche eine Drehlagerung mit relativ großem radialem Abstand zur Drehachse, so dass das Abtriebsteil auch hohen Kipp- und/oder Querkräften widerstehen kann und selbst bei hoher Belastung einen verschleißarmen Betrieb ermöglicht.

Das Abtriebsteil verfügt im Innern des Getriebegehäuses zweckmäßigerweise über einen hohlzylindrischen Wandabschnitt, der in koaxialer Anordnung das als Hohlrad ausgebildete Abtriebszahnrad trägt. Es besteht dabei die vorteilhafte Möglichkeit, das Hohlrad als einstückigen Bestandteil des hohlzylindrischen Wandabschnittes auszubilden, was vor allem bei kleindimensionierten Drehantriebsvorrichtungen verwirklicht wird.

Insbesondere, jedoch nicht ausschließlich in Verbindung mit einer relativ groß bauenden Drehantriebsvorrichtung ist es von Vorteil, wenn das als Hohlrad konzipierte Abtriebszahnrad als separate Komponente an dessen Abtriebsteil und insbesondere an dessen zweckmäßigerweise vorhandenen hohlzylindrischen Wandabschnitt fixiert ist. Das Abtriebszahnrad kann beispielsweise im Rahmen einer Klebeverbindung an dem Abtriebsteil befestigt sein.

Wenn das Abtriebsteil über einen im Innern des Getriebegehäuses angeordneten hohlzylindrischen Wandabschnitt verfügt, besteht die Möglichkeit, das diesbezüglich separate Abtriebszahnrad entweder radial außen oder radial innen an dem hohlzylindrischen Wandabschnitt zu fixieren.

Das Getriebegehäuse ist zweckmäßigerweise so aufgebaut, dass es über einen zur Drehlagerung des Abtriebsteils genutzten Gehäusehauptteil verfügt, der gemeinsam mit einer rückseitig angeordneten Rückwand einen Getrieberaum begrenzt, in dem sich das Abtriebszahnrad befindet und in dem der Verzahnungseingriff zwischen dem Abtriebszahnrad und dem Antriebsritzel stattfindet. Der Antriebsmotor ist stirnseitig außen an der Rückwand befestigt und ragt mit einem das Antriebsritzel aufweisenden, rotativ antreibbaren Ausgangsteil durch eine Öffnung der Rückwand hindurch in den Getrieberaum hinein. Zweckmäßigerweise verfügt der Antriebsmotor über eine Ausgangswelle, auf der das Antriebsritzel direkt und ohne zwischengeschaltete Kupplung befestigt ist.

Von Vorteil ist es, wenn die Rückwand des Getriebegehäuses als bezüglich des Gehäusehauptteils separate Komponente ausgebildet ist, an der der Antriebsmotor unabhängig vom Gehäusehauptteil fixiert ist. Auf diese Weise besteht insbesondere die Möglichkeit, den Antriebsmotor im vom Gehäusehauptteil abgenommenen Zustand der Rückwand an der Rückwand zu befestigen und anschließend die Rückwand einschließlich des daran angebrachten Antriebsmotors als Einheit am Gehäusehauptteil zu befestigen. Dadurch wird die Montage der Drehantriebsvorrichtung vereinfacht.

Als vorteilhaft hat es sich erwiesen, das Getriebegehäuse so auszubilden, dass es bei Betrachtung in der Achsrichtung der Drehachse des Abtriebsteils über vier um die Drehachse des Abtriebsteils herum verteilt angeordnete Eckbereiche verfügt, bei denen es sich insbesondere um Eckbereiche einer zumindest im wesentlichen rechteckigen Außenkontur handelt. Die Eckbereiche liegen auch dann frei, wenn das Abtriebsteil über eine teller- oder scheibenförmige Abtriebswand verfügt, die bevorzugt zentrisch im Bereich der Vorderseite des Getriebegehäuses angeordnet ist. Die vier Eckbereiche können in vorteilhafter Weise zur externen Fixierung des Getriebegehäuses genutzt werden, um die Drehantriebsvorrichtung an einer dafür ausgelegten Tragstruktur zu befestigen. In diesem Zusammenhang ist es von Vorteil, wenn in mindestens einem und vorzugsweise in jedem der vier Eckbereiche des Getriebegehäuses eine geeignete Befestigungsschnittstelle ausgebildet ist. Als besonders zweckmäßig hat es sich erwiesen, die Befestigungsschnittstelle als Befestigungsloch zu realisieren, das sich parallel zur Drehachse des Abtriebsteils erstreckt und das das Getriebegehäuse im zugeordneten Eckbereich zweckmäßigerweise vollständig durchsetzt.

Dadurch, dass das Abtriebszahnrad als Hohlrad ausgebildet ist, verlagert sich der Eingriffsbereich zwischen dem Antriebsritzel und der Verzahnung des Abtriebszahnrades verglichen mit einem eine Außenverzahnung aufweisenden Abtriebszahnrad näher zur Drehachse des Abtriebszahnrades. Auf diese Weise besteht die vorteilhafte Möglichkeit, den elektrischen Antriebsmotor ohne relevante Beeinträchtigung der Querabmessungen der Drehantriebsvorrichtung derart an der Rückseite des Getriebegehäuses zu platzieren, dass der besagte Eingriffsbereich der Verzahnungen nicht in einem der vier Eckbereiche des Getriebegehäuses liegt. Dadurch stehen die Eckbereiche des Getriebegehäuses uneingeschränkt zur externen Fixierung der Drehantriebsvorrichtung zur Verfügung.

Vorteilhaft ist es in diesem Zusammenhang, wenn der erwähnte Eingriffsbereich in einem Sektor liegt, der sich zwischen zwei in der Umfangsrichtung der Drehachse des Abtriebsteils zueinander benachbarten Eckbereichen des Getriebegehäuses und der Drehachse des Abtriebsteils befindet.

Wenn in den Eckbereichen jeweils ein Befestigungsloch als Befestigungsschnittstelle ausgebildet ist, liegt der Eingriffsbereich zweckmäßigerweise in einem dreiecksförmigen Sektor, dessen drei Ecken von den Zentren zweier Befestigungslöcher und der Drehachse des Abtriebszahnrades gebildet sind.

Weiterhin ist es vorteilhaft, wenn der erwähnte Eingriffsbereich der Verzahnungen auf einer als Eingriffsebene bezeichneten Ebene liegt, die mit der Drehachse des Abtriebsteils zusammenfällt und sich mittig zwischen zwei in der Umfangsrichtung der besagten Drehachse zueinander benachbarten Eckbereichen des Getriebegehäuses hindurch erstreckt.

Zweckmäßigerweise hat die Eingriffsebene einen gleich großen Abstand zu zwei sie beidseits flankierenden Befestigungsschnittstellen des Getriebegehäuses.

Als elektrischer Antriebsmotor eignet sich besonders ein Schrittmotor, der in Verbindung mit einem zugeordneten Encoder eine sehr präzise drehwinkelmäßige Positionierung des Abtriebsteils ermöglicht. Selbstverständlich kann alternativ auch ein Servomotor als Antriebsquelle genutzt werden.

Für die Ansteuerung des Antriebsmotors ist es vorteilhaft, wenn die Drehantriebsvorrichtung über einen als Referenzsensor nutzbaren Sensor verfügt, der ausgehend von der Rückseite des Getriebegehäuses in das Getriebegehäuse hineinragt und darin mit einem ortsfest bezüglich des Abtriebsteils angeordneten Betätigungselement kooperiert. Der Sensor ist insbesondere so angeordnet, dass er von der Rückseite des Getriebegehäuses her axial in das als Hohlrad ausgebildete Abtriebszahnrad eintaucht. Der in das Hohlrad eintauchende Abschnitt des Sensors wird von der Innenverzahnung des Hohlrades umrahmt.

Bevorzugt liegt zwischen dem Antriebsritzel und dem Sensor ein Winkelversatz von 90° bezogen auf die Drehachse des Abtriebsteils vor. Auf diese Weise kann eine gegenseitige Beeinflussung sehr gut ausgeschlossen werden.

Der Durchführkanal erstreckt sich zweckmäßigerweise in einem Durchführungsrohr, das fluchtend zu einer Durchbrechung an dem Abtriebsteil befestigt ist und die Drehbewegung des Abtriebsteils mitmacht. Das Durchführungsrohr ragt von dem Abtriebsteil nach hinten weg und durchsetzt das Getriebegehäuse, wobei es zweckmäßigerweise in eine in einer Rückwand des Getriebegehäuses ausgebildete Durchbrechung eingreift. Diese Durchbrechung ist bevorzugt als Führungsausnehmung konzipiert, die das Durchführungsrohr radial stabilisieren kann und die zweckmäßigerweise eine aus Kunststoffmaterial bestehende Führungsbuchse aufweist, welche einen unmittelbaren Kontakt des Durchführungsrohres zu der bevorzugt aus Aluminiummaterial bestehenden Rückwand des Getriebegehäuses verhindert.

Es besteht die vorteilhafte Möglichkeit, an der bezüglich der Drehachse des Abtriebsteils radial orientierten Außenfläche des Getriebegehäuses eine oder mehrere weitere Befestigungsschnittstellen vorzusehen, die zur Fixierung der Drehantriebsvorrichtung an einer Tragstruktur nutzbar sind.

Nachfolgend wird die Erfindung anhand der beiliegenden Zeichnung näher erläutert. In dieser zeigen:

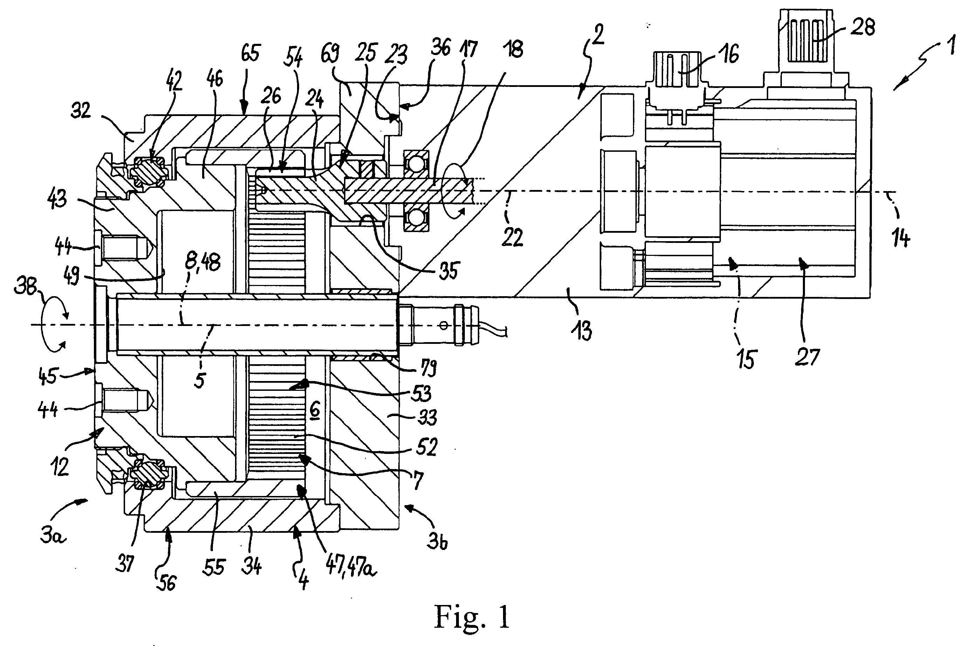

- Figur 1: einen Längsschnitt durch eine bevorzugte Ausführungsform der erfindungsgemäßen Drehantriebsvorrichtung gemäß Schnittlinie I-I aus Figur 3,
- Figur 2: einen bezüglich Figur 1 um 90° versetzten Längsschnitt der Drehantriebsvorrichtung gemäß Schnittlinie II-II aus Figur 4,
- Figur 3: eine Stirnansicht der Drehantriebsvorrichtung von der in Figuren 1 und 2 links liegenden Vorderseite her, und
- Figur 4: eine Rückansicht der Drehantriebsvorrichtung.

Die in ihrer Gesamtheit mit Bezugsziffer 1 bezeichnete elektrisch betätigbare Drehantriebsvorrichtung verfügt als Antriebsquelle über einen elektrischen Antriebsmotor 2, der an der Rückseite 3b eines Getriebegehäuses 4 der Drehantriebsvorrichtung 1 montiert ist. Das Getriebegehäuse 4 hat eine imaginäre Hauptachse 5 und eine der Rückseite 3b entgegengesetzt orientierte Vorderseite 3a, wobei sowohl die Vorderseite 3a als auch die Rückseite 3b in der Achsrichtung der Hauptachse 5 orientiert ist.

Das Getriebegehäuse 4 umgrenzt einen im Folgenden als Getrieberaum 6 bezeichneten Innenraum. In diesem Getrieberaum 6 befinden sich Getriebemittel 7 eines Zahnradgetriebes, die eine Antriebsverbindung zwischen dem Antriebsmotor 2 und einem an dem Getriebegehäuse 4 um eine Drehachse 8 verdrehbar gelagerten Abtriebsteil 12 herstellen.

Die Drehachse 8 des Abtriebsteils 12 hat die gleiche Ausrichtung wie die Hauptachse 5.

Der elektrische Antriebsmotor 2 hat ein Motorgehäuse 13, das bevorzugt eine längliche Gestalt mit einer Motor-Längsachse 14 aufweist. Im Innern des Motorgehäuses 13 befinden sich nur schematisch angedeutete elektromotorische Antriebsmittel 15, die in der Lage sind, aufgrund von an einer elektrischen Schnittstelle 16 eingespeisten elektrischen Betätigungssignalen eine in dem Motorgehäuse 13 drehbar gelagerte Ausgangswelle 17 zu einer durch einen Doppelpfeil angedeuteten Ausgangsdrehbewegung 18 anzutreiben. Die Drehachse 22 der Ausgangswelle 17 hat zweckmäßigerweise die gleiche Ausrichtung wie die Motor-Längsachse 14.

Das Motorgehäuse 13 hat an einer Vorderseite eine axial orientierte Montagefläche 23. An dieser Montagefläche 23 ragt die Ausgangswelle 17 heraus und ist direkt mit einem Antriebsritzel 24 drehfest bestückt, das die Ausgangsdrehbewegung 18 mitmacht. Gemeinsam bilden die Ausgangswelle 17 und das Antriebsritzel 24 ein im Betrieb des Antriebsmotors 2 die Ausgangsdrehbewegung 18 ausführendes Ausgangsteil 25 des Antriebsmotors 2.

Das Antriebsritzel 24 hat eine sich konzentrisch um die Drehachse 22 herum erstreckende Außenverzahnung 26.

Exemplarisch ist der Antriebsmotor 2 als elektrischer Schrittmotor ausgebildet. Alternativ ist der Antriebsmotor 2 ein Servomotor.

Zweckmäßigerweise ist der Antriebsmotor 2 mit einem in der Zeichnung nur schematisch angedeuteten Encoder 27 ausgestattet, der die Drehposition und/oder Drehgeschwindigkeit des Ausgangsteils 25 erfassen kann und der entsprechende Positions- und/oder Geschwindigkeitsdaten an einer weiteren elektrischen Schnittstelle 28 ausgeben kann, um sie einer nicht weiter abgebildeten externen elektronischen Steuereinrichtung zuzuführen.

Das Getriebegehäuse 4 hat eine der Vorderseite 3a zugeordnete Vorderwand 32, eine der Rückseite 3b zugeordnete Rückwand 33 und eine sich rings um die Drehachse 8 des Abtriebsteils 12 herum erstreckende umfangsseitige Seitenwand 34. Die Rückwand 33 ist mit radialem Abstand zu der Drehachse 8 des Abtriebsteils 12, also außermittig, mit einer Durchbrechung 35 versehen, durch die hindurch das Ausgangsteil 25 mit zumindest dem die Außenverzahnung 26 aufweisenden Bestandteil des Antriebsritzels 24 axial in den Getrieberaum 6 hineinragt, wenn der Antriebsmotor 2 mit seiner Montagefläche 23 voraus an einer dafür vorgesehenen Anbaufläche 36 montiert ist, die an der Rückseite 3b der Rückwand 33 vorgesehen ist. Die Durchbrechung 35 mündet zu der genannten Anbaufläche 36 aus.

Die Vorderwand 32 ist im Wesentlichen ringförmig ausgebildet und umgrenzt eine Lagerungsdurchbrechung 37, die einerseits nach außen zur Vorderseite 3a hin offen ist und andererseits in den Getrieberaum 6 einmündet.

In der Lagerungsdurchbrechung 37 ist das Abtriebsteil 12 in bezüglich des Getriebegehäuses 4 drehbarer Weise gelagert. Das Abtriebsteil 12 ist in der Lage, eine durch einen Doppelpfeil illustrierte Abtriebsdrehbewegung 38 bezüglich der Drehachse 8 auszuführen.

Zwischen dem peripheren Außenumfang des Abtriebsteils 12 und dem Innenumfang der Lagerungsdurchbrechung 37 ist eine Lagereinrichtung 42 angeordnet, die die erwähnte drehbare Lagerung des Abtriebsteils 12 bewirkt. Diese Lagereinrichtung 42 ist ringförmig ausgebildet und konzentrisch zu der Drehachse 8 angeordnet. Bevorzugt ist die Lagereinrichtung 42 als Wälzlagereinrichtung ausgeführt.

Beim Ausführungsbeispiel enthält die Lagereinrichtung 42 einen Kranz aus Wälzlagerelementen, die sich rings um das Abtriebsteil 12 herum erstrecken und sich an Wälzflächen abstützen, die einerseits der Seitenwand 34 und andererseits dem Abtriebsteil 12 zugeordnet sind.

Zweckmäßigerweise verfügt das Abtriebsteil 12 an seiner nach vorne gewandten Stirnseite über eine tellerförmig oder scheibenförmig ausgebildete Abtriebswand 43 mit einer zu der Drehachse 8 konzentrischen kreisförmigen Außenkontur. Zumindest diese Abtriebswand 43 des Abtriebsteils 12 ist von außerhalb des Getriebegehäuses 4 her zugänglich, um die Abtriebsdrehbewegung 38 abgreifen zu können. Der Abgriff der Abtriebsdrehbewegung 38 erfolgt, um eine nicht weiter abgebildete externe Komponente rotativ anzutreiben, die an dem Abtriebsteil 12, insbesondere in lösbarer Weise, festlegbar ist. Eine solche anzutreibende Komponente ist beispielsweise eine elektrisch, pneumatisch oder mit Unterdruck betriebene Greifvorrichtung. Insofern kann die Drehantriebsvorrichtung 1 beispielsweise als Bestandteil einer Handhabungsvorrichtung eingesetzt werden, mit der sich Werkstücke oder sonstige Objekte umpositionieren lassen.

Um eine anzutreibende Komponente befestigen zu können, ist das Abtriebsteil 12 mit dafür geeigneten Schnittstellenmitteln 44 versehen. Diese sind exemplarisch in oder an der Abtriebswand 43 des Abtriebsteils 12 ausgebildet. Die Schnittstellenmittel 44 sind an einer der Rückwand 33 axial entgegengesetzten vorderen Außenfläche 45 der Abtriebswand 43 zugänglich und enthalten beispielsweise mehrere mit Gewinde versehene Befestigungslöcher.

Das Abtriebsteil 12 durchsetzt die Lagerungsdurchbrechung 37 und ragt mit seiner Rückseite in den Getrieberaum 6 hinein.

Zweckmäßigerweise verfügt es über einen sich axial rückwärts an die flache Abtriebswand 43 anschließenden hohlzylindrischen Wandabschnitt 46, der sich in dem Getrieberaum 6 mit zur Drehachse 8 konzentrischer Anordnung nach rückwärts in Richtung zu der Rückwand 33 erstreckt. Der hohlzylindrische Wandabschnitt 46 umrahmt eine Ausnehmung 49 des Abtriebsteils 12, die rückseitig, zu der Rückwand 33 hin, offen ist.

Das Abtriebsteil 12 steht mit einem im Innern des Getrieberaumes 6 drehbar angeordneten Abtriebszahnrad 47 in antriebsmäßiger Verbindung. Bevorzugt ist das Abtriebszahnrad 47 drehfest an dem Abtriebsteil 12 angeordnet, wobei seine Drehachse 48 mit der Drehachse 8 des Abtriebsteils 12 zusammenfällt. Zwischen dem Abtriebszahnrad 47 und dem Abtriebsteil 12 kann eine lösbare oder eine unlösbare Verbindung vorliegen.

Bei einem nicht gezeigten Ausführungsbeispiel ist das Abtriebszahnrad 47 einstückig mit dem Abtriebsteil 12 verbunden. Hier können mit anderen Worten das Abtriebsteil 12 und das Abtriebszahnrad 47 von ein und demselben einstückigen Körper gebildet sein.

Exemplarisch ist das Abtriebszahnrad 47 eine bezüglich des Abtriebsteils 12 separate Komponente und durch geeignete Befestigungsmaßnahmen an dem Abtriebsteil 12 befestigt. Wenn das Abtriebsteil 12, wie beim Ausführungsbeispiel, über einen im Getrieberaum 6 angeordneten hohlzylindrischen Wandabschnitt 46 verfügt, ist es vorteilhaft, wenn das Abtriebszahnrad 47 an diesem hohlzylindrischen Wandabschnitt 46 angeordnet ist.

Das Abtriebszahnrad 47 ist wie das Antriebsritzel 24 ein Bestandteil der Getriebemittel 7. Das Antriebsritzel 24 steht mit dem Abtriebszahnrad 47 in Verzahnungseingriff, so dass eine Ausgangsdrehbewegung 18 des Antriebsritzels 24 eine Drehbewegung des Abtriebszahnrades 47 um die Drehachse 48 herum hervorruft und dementsprechend auch die Abtriebsdrehbewegung 38 des Abtriebsteils 12 bewirkt, das mit dem Abtriebszahnrad 47 in Antriebsverbindung steht.

Ein großer Vorteil der Drehantriebsvorrichtung 1 besteht darin, dass sie rechtwinkelig zu der Hauptachse 5 bzw. der Drehachse 8 selbst bei einem relativ voluminös bauenden Antriebsmotor 2 mit kompakten Abmessungen realisierbar ist. Maßgeblich verantwortlich ist dafür die Ausgestaltung der Getriebemittel 7. Während das Antriebsritzel 24, wie schon erwähnt, mit einer Außenverzahnung 26 versehen ist, ist das Abtriebszahnrad 47 als Hohlrad 47a ausgebildet, wobei seine mit der Außenverzahnung 26 des Antriebsritzels 24 kämmende Verzahnung eine sich konzentrisch um die Drehachse 48 herum erstreckende Innenverzahnung 52 ist.

Exemplarisch hat das Abtriebszahnrad 47 einen ringförmigen Zahnradkörper 51, der an seinem radialen Innenumfang die umlaufende Innenverzahnung 52 aufweist.

Vorzugsweise sind die Außenverzahnung 26 und die Innenverzahnung 52 als Geradverzahnungen ausgebildet.

Das von der Rückseite her in den Getrieberaum 6 hineinragende Antriebsritzel 24 taucht axial in das Hohlrad 47a ein. Seine Drehachse 22 ist mit radialem Abstand zur Drehachse 48 des Abtriebszahnrades 47 angeordnet, so dass seine Außenverzahnung 26 mit der Innenverzahnung 52 des Hohlrades 47a in Eingriff steht. Genauer gesagt umrahmt das Hohlrad 47a bzw. dessen Innenverzahnung 52 einen Hohlraum 53, in den hinein sich das Antriebsritzel 24 erstreckt. Der Teilkreisdurchmesser der Innenverzahnung 52 des Hohlrades 47a ist größer und insbesondere um ein Vielfaches größer als derjenige der Außenverzahnung 26 des Antriebsritzels 24.

Derjenige Bereich, in dem das Antriebsritzel 24 und das Abtriebszahnrad 47 miteinander in Eingriff stehen, sei im Folgenden auch als Eingriffsbereich 54 bezeichnet.

Durch die geschilderte Ausgestaltung der Getriebemittel 7 kann die Innenverzahnung 52 zugunsten eines großen Momenten-Übersetzungsverhältnisses mit einem großen Durchmesser versehen werden, ohne dass sich dies nachteilig auf die äußeren Querabmessungen des Getriebegehäuses 4 auswirkt, weil das Antriebsritzel 24 nicht außen am Abtriebszahnrad 47, sondern in dem von dem Hohlrad 47a umrahmten Hohlraum 53 mit dem Abtriebszahnrad in Getriebeeingriff steht.

Beim Ausführungsbeispiel ist das Hohlrad 47a mit einem hohlzylindrischen Befestigungsfortsatz 55 auf den hohlzylindrischen Wandabschnitt 46 radial außen aufgesetzt, so dass sich eine axiale Überlappung ergibt. Dabei kann das Abtriebszahnrad 47 beispielsweise aufgepresst und/oder aufgeklebt sein. Alternativ oder zusätzlich können auch andere Befestigungsmaßnahmen gewählt werden, beispielsweise eine Schraubverbindung.

Bei einem nicht gezeigten Ausführungsbeispiel ist das Hohlrad 47a am Innenumfang des hohlzylindrischen Wandabschnittes 46 ausgebildet oder befestigt.

Die Vorderwand 32 und die Seitenwand 34 des Getriebegehäuses 4 definieren beim Ausführungsbeispiel einen einstückigen Gehäusehauptteil 56. Alternativ hierzu können die Vorderwand 32 und die Seitenwand 34 zur Bildung eines mehrteiligen Gehäusehauptteils 56 auch separat ausgebildet und durch geeignete Befestigungsmittel miteinander verbunden sein.

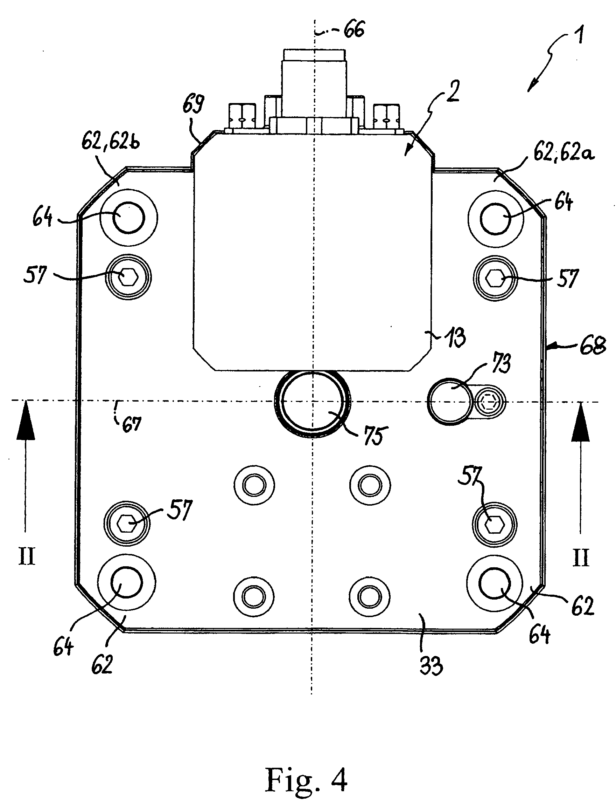

Die Rückwand 33 ist zweckmäßigerweise als bezüglich des Gehäusehauptteils 56 separate Komponente ausgeführt. Sie ist rückseitig an die Seitenwand 34 angesetzt und beispielsweise mittels aus Figur 4 ersichtlichen Befestigungsschrauben 57 von der Rückseite her an dem Gehäusehauptteil 56 in bevorzugt lösbarer Weise fixiert.

Beim Zusammenbau der Drehantriebsvorrichtung 1 wird zweckmäßigerweise der Antriebsmotor 2 an der Rückwand 33 befestigt, bevor die Rückwand 33 an dem Gehäusehauptteil 56 fixiert wird. Mithin können die Rückwand 33 und der Antriebsmotor 2 als vormontierte Montageeinheit an das Gehäusehauptteil 56 angesetzt werden. Bei diesem Ansetzen greift das auf der der Anbaufläche 36 entgegengesetzten Seite über die Rückwand 33 vorstehende Antriebsritzel 24 in das Hohlrad 47a ein.

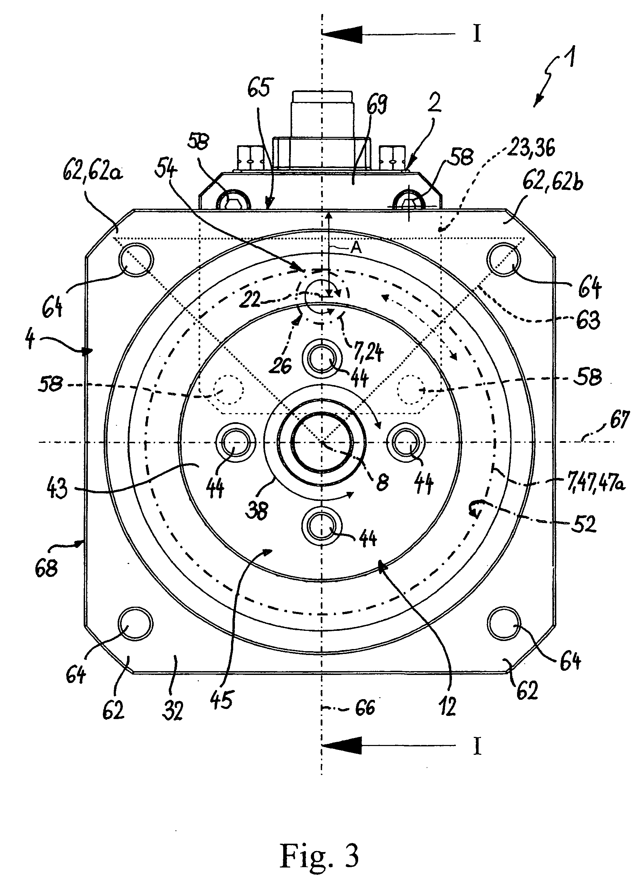

Um den Antriebsmotor 2 an der Rückwand 33 zu befestigen, wird zweckmäßigerweise auf im Folgenden als Motor-Befestigungsschrauben 58 bezeichnete Befestigungsschrauben zurückgegriffen, die von der dem Gehäusehauptteil 56 zugewandten Vorderseite her durch die Rückwand 33 hindurchgeführt sind, um mit dem Motorgehäuse 13 verschraubt zu sein. In Figur 3 sind diese Motor-Befestigungsschrauben 58 zu erkennen, die zumindest teilweise durch das Gehäusehauptteil 56 verdeckt sind. Die Motor-Befestigungsschrauben 58 werden angebracht, bevor die Rückwand 33 an dem Gehäusehauptteil 56 befestigt wird.

Vorzugsweise hat das Getriebegehäuse 4, ausgehend von der Vorderseite 3a in der Achsrichtung der Drehachse 8 des Abtriebsteils 12 betrachtet, eine mehreckige Außenkontur mit vier um die besagte Drehachse 8 herum verteilt angeordneten Eckbereichen 62. Wie aus Figuren 3 und 4 ersichtlich, können die Eckbereiche 62 abgerundet oder abgeschrägt sein. Die vier Eckbereiche bilden zweckmäßigerweise die Eckbereiche eines Rechteckes und dabei vorzugsweise die Eckbereiche eines Quadrates. Bevorzugt verfügt daher das Getriebegehäuse 4 zumindest im Wesentlichen über eine rechteckige und bevorzugt quadratische Außenkontur bei Betrachtung in der Achsrichtung der Drehachse 8.

Wie insbesondere aus Figur 3 hervorgeht, sind die Getriebemittel 7 vorzugsweise so ausgebildet, dass der oben definierte Eingriffsbereich 54 innerhalb eines mittels einer gepunkteten Linie angedeuteten imaginären Sektors 63 liegt, der sich zwischen zwei in der Umfangsrichtung der Drehachse 8 des Abtriebsteils 12 unmittelbar zueinander benachbarten Eckbereichen 62, 62a, 62b des Getriebegehäuses 4 und der Drehachse 8 des Abtriebsteils 12 befindet. Die vorgenannte Umfangsrichtung der Drehachse 8 ist mit der Abtriebsdrehbewegung 38 gleichgerichtet.

Durch diese Platzierung des Eingriffsbereiches 54 wird erreicht, dass die Eckbereiche 62 von dem rückseitig an das Getriebegehäuse 4 angebauten Antriebsmotor 2 nicht verdeckt oder belegt werden. Aus der Figur 3 geht hervor, dass die Umrisse der Montagefläche 23 und der zugeordneten Anbaufläche 36 zwischen den beiden den Sektor 63 aufspannenden Eckbereichen 62a, 62b liegen. Auch die Rückansicht gemäß Figur 4 macht deutlich, dass die vorgenannten Eckbereiche 62a, 62b neben dem Antriebsmotor 2 liegen und von diesem nicht verdeckt werden.

Somit stehen alle Eckbereiche 62 bei Bedarf für eine Befestigung des Getriebegehäuses 2 an einer nicht weiter abgebildeten Tragstruktur zur Verfügung. In diesem Zusammenhang ist es vorteilhaft, wenn in mindestens einem und vorzugsweise in jedem der vier Eckbereiche 62 des Getriebegehäuses 4 eine zur externen Befestigung der Drehantriebsvorrichtung 1 nutzbare Befestigungsschnittstelle 64 ausgebildet ist, die ungeachtet des rückseitig angebauten Antriebsmotors 2 frei zugänglich ist, und zwar vorzugsweise sowohl an der Vorderseite 3a als auch an der Rückseite 3b. Die Befestigungsschnittstellen 64 sind zweckmäßigerweise als Befestigungslöcher konzipiert, die das Getriebegehäuse 4 mit zu der Drehachse 8 paralleler Ausrichtung vollständig durchsetzen. Sie eignen sich für das Einsetzen von Befestigungsschrauben.

Durch die geschilderte Ausgestaltung der Getriebemittel 7 wird erreicht, dass die Drehachse 22 des Antriebsritzels 24 einen relativ großen Abstand "A" zu dem zwischen den beiden vorgenannten Eckbereichen 62a, 62b verlaufenden Seitenflächenabschnitt 65 der Außenfläche der Seitenwand 34 aufweist. Dieser Abstand "A" reicht problemlos aus, um das Antriebsritzel 24 im Getriebegehäuse 4 unterzubringen, ohne dessen Querabmessungen vergrößern zu müssen.

Beim Ausführungsbeispiel liegt der Eingriffsbereich 54 auf einer mit der Drehachse 8 des Abtriebsteils 12 zusammenfallenden, als Eingriffsebene 66 bezeichneten Ebene, die sich mittig zwischen den beiden oben erwähnten, in der Umfangsrichtung der Drehachse 8 des Abtriebsteils 12 unmittelbar benachbart zueinander angeordneten Eckbereichen 62a, 62b hindurch erstreckt.

Weiterhin lässt sich zum bevorzugten Ausführungsbeispiel sagen, dass die Drehachse 22 des Antriebsritzels 24 in der vorgenannten Eingriffsebene 66 liegt, deren Abstand zu den Befestigungsschnittstellen 64 der beiden erwähnten Eckbereiche 62a, 62b gleich groß ist. Die genannten Eckbereiche 62a, 62b liegen auf der gleichen Seite einer zu der Eingriffsebene 66 rechtwinkeligen Querebene 67.

Vorzugsweise ist die Drehantriebsvorrichtung 1 so ausgelegt, dass die Konturen der Montagefläche 23 und der Anbaufläche 36 innerhalb des erwähnten rechteckigen Umrisses des Getriebegehäuses 4 liegen. Grundsätzlich ist es aber möglich, einen derartigen Versatz zwischen dem Getriebegehäuse 4 und dem Antriebsmotor 2 vorzusehen, dass der Antriebsmotor 2 seitlich ein Stück weit über den bevorzugt zumindest im Wesentlichen rechteckigen Außenumriss 68 des Getriebegehäuses 4 hinausragt. Dies trifft auf das Ausführungsbeispiel zu. Damit trotz einer solchen Anordnung ein vollflächiger Anbau der Montagefläche 23 an der Rückwand 33 möglich ist, ist es von Vorteil, wenn die Rückwand 33 in einem zwischen den benachbarten Eckbereichen 62, 32b liegenden Bereich einen Montagefortsatz 69 aufweist, der über den sich zur Vorderseite 3a hin anschließenden Seitenflächenabschnitt 65 vorsteht.

Eine zweckmäßige Ausgestaltung der Drehantriebsvorrichtung 1 sieht vor, dass ein für die drehwinkelmäßige Positionierung des Abtriebsteils 12 nutzbarer Sensor 73 vorhanden ist. Dieser Sensor 73, der vorzugsweise auf induktiver Basis arbeitet, wird insbesondere als Referenzsensor eingesetzt, um bei der Inbetriebnahme beispielsweise eine bestimmte vordefinierte Ausgangs-Drehposition des Abtriebsteils 12 zu detektieren.

Der Sensor 73 ist bevorzugt lösbar am Getriebegehäuse 4 befestigt und kooperiert mit einem bezüglich des Abtriebsteils 12 ortsfesten Betätigungselement 74, das die Drehbewegung des Abtriebsteils 12 mitmacht. Bei diesem Betätigungselement 74 handelt es sich beispielsweise um ein ferromagnetisches Bauteil, das an dem bevorzugt aus Aluminiummaterial bestehenden Abtriebsteil 12 im Innern des Getrieberaumes 6 fixiert ist.

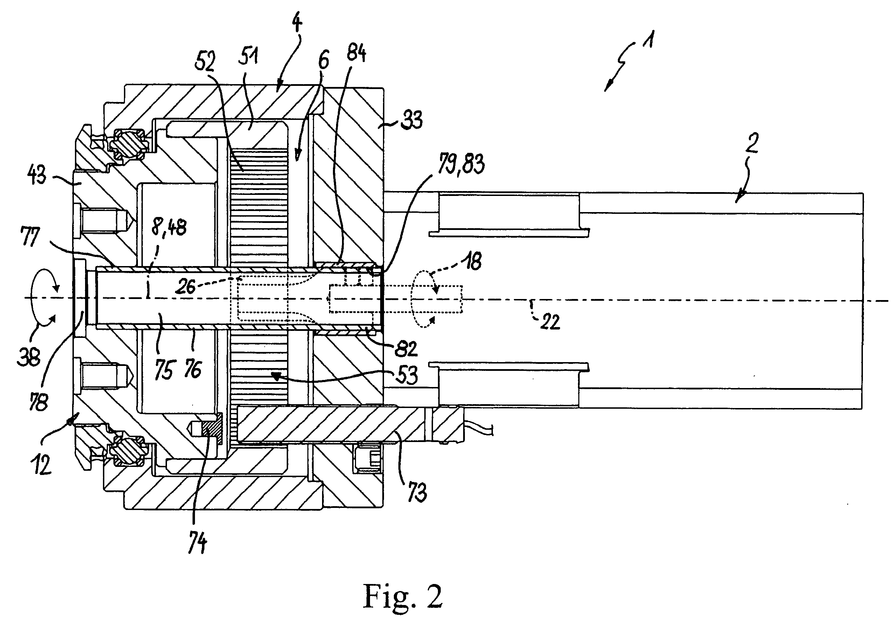

Der Sensor 73 ist zweckmäßigerweise an der Rückwand 33 angeordnet und ragt, wie aus Figur 2 ersichtlich, vergleichbar dem Antriebsritzel 24 von der Rückseite 3b her in den von dem Hohlrad 47a umgrenzten Hohlraum 53 hinein. Das Betätigungselement 74 ist an dem Abtriebsteil 12 an einer Stelle befestigt, die auf einer zu der Drehachse 8 konzentrischen Kreislinie liegt, die axial einer Stirnfläche des Sensors 73 gegenüberliegt. Auf diese Weise ist der Sensor 73 jedesmal aktivierbar, wenn das Betätigungselement 74 bei einer Abtriebsdrehbewegung 38 an ihm vorbeibewegt wird.

Der Sensor 73 ist zweckmäßigerweise an die gleiche elektronische Steuereinrichtung anschließbar, die auch für die Betätigung des Antriebsmotors 2 zuständig ist.

Ein weiteres vorteilhaftes Ausstattungsmerkmal der Drehantriebsvorrichtung 1 besteht in einem Durchführkanal 75, der sich durch das Getriebegehäuse 4 und das Abtriebsteil 12 in zu der Drehachse 8 koaxialer Anordnung hindurch erstreckt. Der Durchführkanal 75 mündet einerseits zur vorderen Außenfläche 45 des Abtriebsteils 12 und andererseits zur Rückseite 3b des Getriebegehäuses 4 aus und ist zur Durchführung von Energieübertragungsmitteln wie Kabel oder Schläuche nutzbar. Mit solchen Energieübertragungsmitteln kann, ohne auf eine drehbare Zwischenkupplung zurückgreifen zu müssen, vom Bereich der Rückseite 3b her eine Energieversorgung einer an den Schnittstellenmitteln 44 angebrachten Komponente bewerkstelligt werden.

Bevorzugt ist der Durchführkanal 75 mittels eines Durchführungsrohres 76 realisiert, das mit einem vorderen Endabschnitt 77 derart an der Abtriebswand 43 fixiert ist, dass der Rohrinnenraum mit einer zentralen Durchbrechung 78 der Abtriebswand 43 fluchtet. Beispielsweise ist das Durchführungsrohr 76 in die zentrale Durchbrechung 78 eingesteckt und dabei insbesondere eingepresst, eingeklebt oder eingeschraubt.

Ausgehend von der Abtriebswand 43 erstreckt sich das Durchführungsrohr 76 in Richtung zu der Rückseite 3b, wobei es in eine die Rückwand 33 axial durchsetzende zentrale Durchbrechung 79 drehbeweglich eintaucht. Auf diese Weise ist der Durchführungskanal 75 gebildet von der zentralen Durchbrechung 78 der Abtriebswand 43, von dem Durchführungskanal 75 und - abhängig von der Eintauchtiefe - eventuell auch von der zentralen Durchbrechung 79 der Rückwand 33. Das Durchführungsrohr 76 kann mit seinem der Rückwand 33 zugeordneten hinteren Endabschnitt 82 innerhalb der zentralen Durchbrechung 79 enden oder auch axial darüber hinausstehen.

Die zentrale Durchbrechung 79 der Rückwand 33 ist zweckmäßigerweise als Führungsausnehmung 83 konzipiert, die den hinteren Endabschnitt 82 des Durchführungsrohres 76 unter Gewährleistung seiner Drehbeweglichkeit radial abstützt. Zur Bildung der Führungsausnehmung 83 ist in die zentrale Durchbrechung 79 zweckmäßigerweise eine aus Kunststoffmaterial gebildete Führungsbuchse 84 eingesetzt. Auf diese Weise wird ein unmittelbarer Kontakt des vorzugsweise aus Metall bestehenden Durchführungsrohres 76 mit der bevorzugt ebenfalls aus Metall bestehenden Rückwand 33 vermieden. Das Durchführungsrohr 76 macht die Abtriebsdrehbewegung 38 des Abtriebsteils 12 mit.

Vorzugsweise kann der Antriebsmotor 2 eine unidirektionale und/oder eine hin- und hergehende alternierende Ausgangsdrehbewegung 18 hervorrufen, um eine entsprechende unidirektionale und/oder hin- und hergehende Abtriebsdrehbewegung 38 des Abtriebsteils 12 zu erzeugen.

## Patentansprüche

1. Elektrisch betätigte Drehantriebsvorrichtung, mit einem eine Vorderseite (3a) und eine diesbezüglich entgegengesetzte Rückseite (3b) aufweisenden Getriebegehäuse (4), an dem ein an der Vorderseite (3a) des Getriebegehäuses (4) zugängliches Abtriebsteil (12) drehbar gelagert ist, das mit einem in dem Getriebegehäuse (4) drehbar angeordneten Abtriebszahnrad (47) in Antriebsverbindung steht, mit dem ein Antriebsritzel (24) eines außen an der Rückseite (3b) des Getriebegehäuses (4) angeordneten elektrischen Antriebsmotors (2) in Verzahnungseingriff steht, wobei das Abtriebszahnrad (47) als Hohlrad (47a) mit einer Innenverzahnung (52) ausgebildet ist und wobei das Antriebsritzel (24) im Innern des Getriebegehäuses (4) axial in das Hohlrad (47a) eintaucht und mit dessen Innenverzahnung (52) in Verzahnungseingriff steht, **dadurch gekennzeichnet, dass** sich durch das Getriebegehäuse (4) und das Abtriebsteil (12) ein zur Drehachse (8) des Abtriebsteils (12) koaxialer Durchführkanal (75) hindurch erstreckt, der zur Vorderseite des Abtriebsteils (12) und zur Rückseite (3b) des Getriebegehäuses (4) ausmündet und der zur Durchführung von Energieübertragungsmitteln wie Kabel oder Schläuche nutzbar ist.

2. Drehantriebsvorrichtung nach Anspruch 1, **dadurch gekennzeichnet, dass** das Abtriebsteil (12) stirnseitig eine teller- oder scheibenförmige Abtriebswand (43) aufweist, an der Schnittstellenmittel (44) zur Fixierung einer anzutreibenden Komponente ausgebildet sind.

3. Drehantriebsvorrichtung nach Anspruch 1 oder 2, **dadurch gekennzeichnet, dass** das Abtriebsteil (12) im Innern des Getriebegehäuses (4) einen hohlzylindrischen Wandabschnitt (46) aufweist, der in koaxialer Anordnung das als Hohlrad (47a) ausgebildete Abtriebszahnrad (47) trägt.

4. Drehantriebsvorrichtung nach einem der Ansprüche 1 bis 3, **dadurch gekennzeichnet, dass** das Abtriebszahnrad (47) als separate Komponente an dem Abtriebsteil (12) und insbesondere an einem hohlzylindrischen Wandabschnitt (46) des Abtriebsteils (12) befestigt ist.

5. Drehantriebsvorrichtung nach Anspruch 3 oder 4, **dadurch gekennzeichnet, dass** das Abtriebszahnrad (47) radial außen oder radial innen an dem hohlzylindrischen Wandabschnitt (46) des Abtriebsteils (12) fixiert ist.

6. Drehantriebsvorrichtung nach einem der Ansprüche 1 bis 5, **dadurch gekennzeichnet, dass** das Getriebegehäuse (4) einen Gehäusehauptteil (56) aufweist, an dem das Abtriebsteil (12) drehbar gelagert ist und der gemeinsam mit einer der Rückseite (3b) zugeordneten Rückwand (33) des Getriebegehäuses (4) einen das Abtriebszahnrad (47) aufnehmenden Getrieberaum (6) begrenzt, wobei der Antriebsmotor (2) außen an der Rückwand (33) befestigt ist und wobei ein das Antriebsritzel (24) aufweisendes, rotativ antreibbares Ausgangsteil (25) des Antriebsmotors (2) durch die Rückwand (33) hindurch in den Getrieberaum (6) hineinragt.

7. Drehantriebsvorrichtung nach Anspruch 6, **dadurch gekennzeichnet, dass** die Rückwand (33) eine bezüglich des Gehäusehauptteils (56) separate Komponente ist, an der der Antriebsmotor (2) unabhängig von dem Gehäusehauptteil (56) und insbesondere in lösbarer Weise befestigt ist.

8. Drehantriebsvorrichtung nach einem der Ansprüche 1 bis 7, **dadurch gekennzeichnet, dass** das Getriebegehäuse (4) ausgehend von der Vorderseite (3a) in Achsrichtung der Drehachse (8) des Abtriebsteils (12) betrachtet eine Außenkontur mit vier um diese Drehachse (8) herum verteilt angeordneten Eckbereichen (62) aufweist, bei der es sich zweckmäßigerweise um eine zumindest im Wesentlichen rechteckige Außenkontur handelt, wobei ein Eingriffsbereich (54), in dem das Antriebsritzel (24) mit dem Abtriebszahnrad (47) in Verzahnungseingriff steht, in einem Sektor (63) liegt, der sich zwischen zwei in der Umfangsrichtung der Drehachse (8) des Abtriebsteils (12) zueinander benachbarten Eckbereichen (62, 62a, 62b) und der Drehachse (8) des Abtriebsteils (12) befindet.

9. Drehantriebsvorrichtung nach einem der Ansprüche 1 bis 8, **dadurch gekennzeichnet, dass** das Getriebegehäuse (4) von der Vorderseite (3a) her in Achsrichtung der Drehachse (8) des Abtriebsteils betrachtet eine Außenkontur mit vier um diese Drehachse (8) herum verteilt angeordneten Eckbereichen (62) aufweist, bei der es sich zweckmäßigerweise um eine zumindest im Wesentlichen rechteckige Außenkontur handelt, wobei ein Eingriffsbereich (54), in dem das Antriebsritzel (24) mit dem Abtriebszahnrad (47) in Verzahnungseingriff steht, auf einer mit dieser Drehachse (8) zusammenfallenden Eingriffsebene (66) liegt, die sich mittig zwischen zwei in der Umfangsrichtung der Drehachse (8) des Abtriebsteils (12) zueinander benachbarten Eckbereichen (62, 62a, 62b) des Getriebegehäuses (4) hindurch erstreckt.

10. Drehantriebsvorrichtung nach Anspruch 8 oder 9, **dadurch gekennzeichnet, dass** in mehreren und insbesondere in jedem der vier Eckbereiche (62) des Getriebegehäuses (4) eine zur externen Befestigung der Drehantriebsvorrichtung (1) nutzbare Befestigungsschnittstelle (64) ausgebildet ist, insbesondere in der Form eines sich parallel zur Drehachse (8) des Abtriebsteils (12) erstreckenden Befestigungsloches.

11. Drehantriebsvorrichtung nach Anspruch 10, **dadurch gekennzeichnet, dass** die zur Drehachse (8) des Abtriebsteils (12) parallele Drehachse (22) des Antriebsritzels (24) in einer Eingriffsebene (66) liegt, die einen gleich großen Abstand zu den beidseits dieser Eingriffsebene (66) auf der gleichen Seite einer zu der Eingriffsebene (66) rechtwinkeligen Querebene (67) liegenden Befestigungsschnittstellen (64) des Getriebegehäuses (4) hat.

12. Drehantriebsvorrichtung nach einem der Ansprüche 1 bis 11, **dadurch gekennzeichnet, dass** der Antriebsmotor mit einer stirnseitigen Montagefläche (23) voraus an einer Anbaufläche (36) einer Rückwand (33) des Getriebegehäuses (4) montiert ist, die teilweise an einem Montagevorsprung (69) der Rückwand (33) des Getriebegehäuses (4) ausgebildet ist, der über einen zumindest im Wesentlichen rechteckigen Außenumriss (68) des Getriebegehäuses (4) hinausragt.

13. Drehantriebsvorrichtung nach einem der Ansprüche 1 bis 12, **dadurch gekennzeichnet, dass** der Antriebsmotor (2) ein Schrittmotor oder ein Servomotor ist und/oder dass der Antriebsmotor (2) mit einem Encoder (27) für die Drehposition und/oder Drehgeschwindigkeit des Abtriebsteils (12) ausgestattet ist.

14. Drehantriebsvorrichtung nach einem der Ansprüche 1 bis 13, **dadurch gekennzeichnet, dass** ein für die drehwinkelmäßige Positionierung des Abtriebsteils (12) genutzter Sensor (73) ausgehend von der Rückseite (3b) des Getriebegehäuses (4) in das Getriebegehäuse (4) hineinragt und mit einem ortsfest bezüglich des Abtriebsteils (12) angeordneten Betätigungselement (74) kooperiert, wobei der Sensor (73) zweckmäßigerweise axial in das als Hohlrad (47) ausgebildete Abtriebszahnrad (47) eintaucht.

15. Drehantriebsvorrichtung nach einem der Ansprüche 1 bis 14, **dadurch gekennzeichnet, dass** der Durchführkanal (75) zumindest partiell in einem Durchführungsrohr (76) ausgebildet ist, das an dem Abtriebsteil (12) befestigt ist, einen das Abtriebszahnrad (47) aufnehmenden Getrieberaum (6) des Getriebegehäuses (4) durchsetzt und drehbar in eine in einer Rückwand (33) des Getriebegehäuses (4) ausgebildete, zweckmäßigerweise als Führungsausnehmung (83) gestaltete Durchbrechung (79) eingreift.

## Claims

1. Electrically actuated rotary drive unit, with a gear casing (4) having a front (3 a), and a rear (3b) opposite the former, and on which is rotatably mounted an output member (12) accessible at the front (3a) of the gear casing (4) and in driving connection with a driven gear (47) mounted rotatably in the gear casing (4) and in gearing engagement with a drive pinion (24) of an electrical drive motor (2) mounted externally at the rear (3b) of the gear casing (4), wherein the driven gear (47) is in the form of a ring gear (47a) with an internal tooth system (52), wherein the drive pinion (24) inside the gear casing (4) dips axially into the ring gear (47a) and makes gearing engagement with its internal tooth system (52), **characterised in that** there extends through the gear casing (4) and the output member (12) a feed-through passage (75) which is coaxial to the rotation axis (8) of the output member (12), opens out at the front of the output member (12) and the rear (3b) of the gear casing (4), and may be used for the feed-through of power transmission means such as cables or hoses.

2. Rotary drive unit according to claim 1 **characterised in that**, at its end face, the output member (12) has a plate- or disc-shaped output wall (43), on which are formed interface means (44) suitable for the fixing of a component which is to be driven.

3. Rotary drive unit according to claim 1 or 2 **characterised in that**, inside the gear casing (4), the output member (12) has a hollow-cylindrical wall section (46) which supports the driven gear (47) in the form of a ring gear (47a), in a coaxial arrangement.

4. Rotary drive unit according to any of claims 1 to 3, **characterised in that** the driven gear (47) is attached to the output member (12) as a separate component and in particular to a hollow-cylindrical wall section (46) of the output member (12).

5. Rotary drive unit according to claim 3 or 4, **characterised in that** the driven gear (47) is fixed to the radial outside or the radial inside of the hollow-cylindrical wall section (46) of the output member (12).

6. Rotary drive unit according to any of claims 1 to 5, **characterised in that** the gear casing (4) has a casing main member (56) on which the output member (12) is rotatably mounted and which, together with a back panel (33) of the gear casing (4) assigned to the rear (3b), bounds a gear space (6) accommodating the driven gear (47), wherein the drive motor (2) is fixed to the outside of the back panel (33) and wherein an output member (25) of the drive motor (2) which has the drive pinion (24) and may be rotary-driven extends through the back panel (33) into the gear space (6).

7. Rotary drive unit according to claim 6, **characterised in that** the back panel (33) is a separate component from the casing main member (56), with the drive motor (2) being fastened to the back panel, in particular releasably, independently of the casing main member (56).

8. Rotary drive unit according to any of claims 1 to 7, **characterised in that** the gear casing (4), viewed from the front (3a) in the axial direction of the rotation axis (8) of the output member (12), has an external contour with four corner zones (62) distributed around this rotation axis (8), involving expediently an external contour which is at least substantially rectangular, wherein an engagement zone (54) in which the drive pinion (24) is in gearing engagement with the driven gear (47) lies in a sector (63) lying between two corner zones (62, 62a, 62b) adjacent to one another in the circumferential direction of the rotation axis (8) of the output member (12) and the rotation axis (8) of the output member (12).

9. Rotary drive unit according to any of claims 1 to 8, **characterised in that** the gear casing (4), viewed from the front (3a) in the axial direction of the rotation axis (8) of the output member, has an external contour with four corner zones (62) distributed around this rotation axis (8), involving expediently an external contour which is at least substantially rectangular, wherein an engagement zone (54) in which the drive pinion (24) is in gearing engagement with the driven gear (47) lies on an engagement plane (66) coinciding with this rotation axis (8) and extending centrally between between two corner zones (62, 62a, 62b) of the gear casing (4) adjacent to one another in the circumferential direction of the rotation axis (8) of the output member (12).

10. Rotary drive unit according to claim 8 or 9, **characterised in that** there is formed in several and in particular in each of the four corner zones (62) of the gear casing (4) a mounting interface (64) which may be used for external mounting of the rotary drive unit (1) and is in particular in the form of a mounting hole extending parallel to the rotation axis (8) of the output member (12).

11. Rotary drive unit according to claim 10, **characterised in that** the rotation axis (22) of the drive pinion (24) parallel to the rotation axis (8) of the output member (12) lies in an engagement plane (66) which has clearance of equal size from the mounting interfaces (64) of the gear casing (4) lying either side of this engagement plane (66) on the same side of a lateral plane (67) lying at right-angles to the engagement plane (66).

12. Rotary drive unit according to any of claims 1 to 11, **characterised in that** the drive motor (2) is fitted, with an end face mounting surface (23) leading, to an attachment face (36) of a back panel (33) of the gear casing (4), which is formed partly on an assembly extension (69) of the back panel (33) of the gear casing (4) which extends beyond an external contour (68) of the gear casing (4) which is at least substantially rectangular.

13. Rotary drive unit according to any of claims 1 to 12, **characterised in that** the drive motor (2) is a stepping motor or a servomotor and/or that the drive motor (2) is equipped with an encoder (27) for the rotary position and/or rotation speed of the output member (12).

14. Rotary drive unit according to any of claims 1 to 13, **characterised in that** a sensor (73) used for rotation angle positioning of the output member (12), starting from the rear (3b) of the gear casing (4), extends into the gear casing (4) and cooperates with an actuating element (74) which is stationary relative to the output member (12), wherein the sensor (73) expediently dips axially into the driven gear (47) in the form of a ring gear (47).

15. Rotary drive unit according to any of claims 1 to 14, **characterised in that** the feed-through passage (75) is formed at least partly in a feed-through tube (76), which is fastened to the output member (12), passes through the gear space (6) of the gear casing (4) accommodating the driven gear (47) and engages rotatably in a through hole (79), expediently designed as a guide recess (83) and formed in a back panel (33) of the gear casing (4).

## Revendications

1. Dispositif d'entraînement en rotation actionné électriquement, comprenant un carter de transmission (4) qui présente une face avant (3a) et une face arrière (3b) opposée à celle-ci et sur lequel un élément mené (12) accessible sur la face avant (3a) du carter de transmission (4) est monté rotatif et est en liaison d'entraînement avec une roue dentée menée (47) qui est montée en rotation dans le carter de transmission (4) et avec laquelle un pignon d'entraînement (24) d'un moteur d'entraînement électrique (2) disposé à l'extérieur sur la face arrière (3b) du carter de transmission (4) est en engrènement de dentures, la roue dentée menée (47) étant réalisée comme une couronne (47a) pourvue d'une denture intérieure (52) et le pignon d'entraînement (24) s'enfonçant à l'intérieur du carter de transmission (4) axialement dans la couronne (47a) et étant en engrènement de dentures avec la denture intérieure (52) de cette dernière, **caractérisé en ce qu'**un canal de passage (75) coaxial à l'axe de rotation (8) de l'élément mené (12) s'étend à travers le carter de transmission (4) et l'élément mené (12) et débouche en direction de la face avant de l'élément mené (12) et de la face arrière (3b) du carter de transmission (4) et peut être utilisé pour faire passer des moyens de transmission d'énergie tels que des câbles ou des tuyaux.

2. Dispositif d'entraînement en rotation selon la revendication 1, **caractérisé en ce que** l'élément mené (12) comprend frontalement une paroi menée (43) en forme de rondelle ou de disque, sur laquelle sont formés des moyens d'interface (44) destinés à fixer un composant à entraîner.

3. Dispositif d'entraînement en rotation selon la revendication 1 ou 2, **caractérisé en ce que** l'élément mené (12) comprend à l'intérieur du carter de transmission (4) une section de paroi (46) de forme cylindrique creuse, qui porte en agencement coaxial la roue dentée menée (47) réalisée comme une couronne (47a).

4. Dispositif d'entraînement en rotation selon l'une quelconque des revendications 1 à 3, **caractérisé en ce que** la roue dentée menée (47) comme composant séparé est fixée sur l'élément mené (12) et en particulier sur une section de paroi (46) de forme cylindrique creuse de l'élément mené (12).

5. Dispositif d'entraînement en rotation selon la revendication 3 ou 4, **caractérisé en ce que** la roue dentée menée (47) est fixée radialement à l'extérieur ou radialement à l'intérieur sur la section de paroi (46) de forme cylindrique creuse de l'élément mené (12).

6. Dispositif d'entraînement en rotation selon l'une quelconque des revendications 1 à 5, **caractérisé en ce que** le carter de transmission (4) comprend une partie principale de carter (56) sur laquelle l'élément mené (12) est monté en rotation et qui délimite conjointement avec une paroi arrière (33), associée à la face arrière (3b), du carter de transmission (4) un espace de transmission (6) logeant la roue dentée menée (47), le moteur d'entraînement (2) étant fixé à l'extérieur sur la paroi arrière (33) et une partie de sortie (25) du moteur d'entraînement (2) pouvant être entraînée en rotation et comprenant le pignon d'entraînement (24) faisant saillie à travers la paroi arrière (33) à l'intérieur de l'espace de transmission (6).

7. Dispositif d'entraînement en rotation selon la revendication 6, **caractérisé en ce que** la paroi arrière (33) est un composant séparé par rapport à la partie principale de carter (56) sur lequel le moteur d'entraînement (2) est fixé indépendamment de la partie principale de carter (56) et en particulier d'une manière détachable.

8. Dispositif d'entraînement en rotation selon l'une quelconque des revendications 1 à 7, **caractérisé en ce que** le carter de transmission (4) présente, vu à partir de la face avant (3a) dans la direction axiale de l'axe de rotation (8) de l'élément mené (12), un contour extérieur présentant quatre zones angulaires (62) réparties autour de cet axe de rotation (8), le contour étant de manière appropriée un contour extérieur au moins sensiblement rectangulaire, une zone d'engrènement (54), dans laquelle le pignon d'entraînement (24) est en engrènement de dentures avec la roue dentée menée (47), se situe dans un secteur (63) qui se trouve entre deux zones angulaires (62, 62a, 62b) voisines l'une de l'autre dans la direction périphérique de l'axe de rotation (8) de l'élément mené (12) et l'axe de rotation (8) de l'élément mené (12).

9. Dispositif d'entraînement en rotation selon l'une quelconque des revendications 1 à 8, **caractérisé en ce que** le carter de transmission (4), vu depuis la face avant (3a) dans la direction axiale de l'axe de rotation (8) de l'élément mené, présente un contour extérieur comprenant quatre zones angulaires (62) réparties autour de cet axe de rotation (8), le contour étant de manière appropriée un contour extérieur au moins sensiblement rectangulaire, une zone d'engrènement (54), dans laquelle le pignon d'entraînement (24) est en engrènement de dentures avec la roue dentée menée (47), se situant sur un plan d'engrènement (66) qui coïncide avec cet axe de rotation (8) et qui s'étend de manière centrale entre deux zones angulaires (62, 62a, 62b) du carter de transmission (4) voisines les unes des autres dans la direction périphérique de l'axe de rotation (8) de l'élément mené (12).

10. Dispositif d'entraînement en rotation selon la revendication 8 ou 9, **caractérisé en ce qu'**une interface de fixation (64) pouvant être utilisée pour la fixation externe du dispositif d'entraînement en rotation (1), en particulier sous la forme d'un trou de fixation s'étendant parallèlement à l'axe de rotation (8) de l'élément mené (12), est formée dans plusieurs et en particulier dans chacune des quatre zones angulaires (62) du carter de transmission (4).

11. Dispositif d'entraînement en rotation selon la revendication 10, **caractérisé en ce que** l'axe de rotation (22), parallèle à l'axe de rotation (8) de l'élément mené (12), du pignon d'entraînement (24) se situe dans un plan d'engrènement (66) qui présente un écart de même grandeur par rapport aux interfaces de fixation (64) du carter de transmission (4) situées de part et d'autre de ce plan d'engrènement (66) sur la même face d'un plan transversal (67) perpendiculaire au plan d'engrènement (66).

12. Dispositif d'entraînement en rotation selon l'une quelconque des revendications 1 à 11, **caractérisé en ce que** le moteur d'entraînement est monté par une surface de montage frontale (23) à l'avance sur une surface d'appui (36) d'une paroi arrière (33) du carter de transmission (4), qui est formée en partie sur une saillie de montage (69) de la paroi arrière (33) du carter de transmission (4) qui fait saillie d'un contour extérieur (68) au moins sensiblement rectangulaire du carter de transmission (4).

13. Dispositif d'entraînement en rotation selon l'une quelconque des revendications 1 à 12, **caractérisé en ce que** le moteur d'entraînement (2) est un moteur pas à pas ou un servomoteur et/ou **en ce que** le moteur d'entraînement (2) est équipé d'un codeur (27) pour la position rotative et/ou la vitesse de rotation de l'élément mené (12).

14. Dispositif d'entraînement en rotation selon l'une quelconque des revendications 1 à 13, **caractérisé en ce qu'**un capteur (73) utilisé pour le positionnement, du point de vue de l'angle de rotation, de l'élément mené (12) fait saillie à partir de la face arrière (3b) du carter de transmission (4) à l'intérieur du carter de transmission (4) et coopère avec un élément d'actionnement (74) monté fixe par rapport à l'élément mené (12), le capteur (73) s'enfonçant de manière appropriée axialement dans la roue dentée menée (47) réalisée comme une couronne (47).

15. Dispositif d'entraînement en rotation selon l'une quelconque des revendications 1 à 14, **caractérisé en ce que** le canal de passage (75) est réalisé au moins en partie dans un tube de passage (76) qui est fixé sur l'élément mené (12), traverse un espace de transmission (6) du carter de transmission (4) logeant la roue dentée menée (47) et s'engrène en rotation dans un percement (79) formé dans une paroi arrière (33) du carter de transmission (4) et réalisé de manière appropriée comme un évidement de guidage (83).
